# EUROPEAN PATENT SPECIFICATION

(11) **EP 1 551 234 B1**
(45) Date of publication and mention of the grant of the patent: **19.03.2008**
(21) Application number: 03750767.0
(22) Date of filing: 14.10.2003
(51) Int. Cl.: A23L 1/164

(54) **BREAKFAST CEREALS WITH DECREASED SOAKING AND METHOD FOR DECREASING SOAKING OF BREAKFAST CEREALS**
FRÜHSTÜCKSZEREALIEN MIT VERRINGERTEM DURCHWEICHEN UND VERFAHREN ZUM VERRINGERN DES DURCHWEICHENS VON FRÜHSTÜCKSZEREALIEN
CEREALES POUR PETIT DEJEUNER A TREMPAGE REDUIT ET PROCEDE PERMETTANT DE REDUIRE LE TREMPAGE DES CEREALES POUR PETIT DEJEUNER

(30) Priority: 14.10.2002 FI 20021822
(43) Date of publication of application: 13.07.2005
(73) Proprietor: Raisio Nutrition Ltd., 21201 Raisio (FI)
(72) Inventor: POURU, Anniina, FIN-21200 Raisio (FI); SINN, Leena, FIN-21500 Piikkiö (FI)
(74) Representative: Svensson, Johan Henrik
(86) International application number: PCT/FI2003/000761
(87) International publication number: WO 2004/034815

(56) References cited:
- WO-A1-02/082929
- US-A- 6 129 944
- US-A- 2002 006 461
- US-B1- 6 274 574

## Description

### Field of Invention

The present invention concerns improved breakfast cereals. The new products have decreased soaking and they are healthier due to added ingredients.

### Background of the Invention

Traditionally cereals are consumed as bread or porridge or as a part of food preparations. Breakfast cereals are currently consumed in increasing amounts, and there is a growing need for healthy products with high sensory quality and high nutritional value. Food manufacturers have already added a variety of ingredients, such as sugar, honey, oil, and more recently chocolate to breakfast cereals.

The textural characteristics of breakfast cereals play an essential role in determining the final acceptance by consumers. The texture is often more important than e.g. taste and colour. Textural characteristics can be defined for example as crispiness and mouthfeel. Both stickiness and softness are unwanted characteristics and they are related to soaking of the product. The most important factor concerning the sensory properties of breakfast cereals is the texture when liquid, e.g. milk or juice, is already added.

It is known that plant sterol esters have serum cholesterol level lowering effects. Stanol fatty acid esters and the effects thereof, as well as a suitable method for their preparation, are disclosed in US Patent No. 6,174,560. The current literature and especially FDA's conclusion to allow a health claim for plant sterols has increased the interest of the food industry in supplementing foods with plant sterols. However, the effects of plant sterol esters on the physical properties of different foods are poorly understood. Therefore there is a need to clarify this area.

Dietary fibres contain insoluble and soluble substances. The cholesterol-lowering effects have mainly been associated to soluble fibres because of their viscosity behaviour, but also insoluble fibres may affect the serum cholesterol levels. β-glucan and especially β-glucan from oat, is known to have cholesterol-lowering effect, and FDA has approved a health claim on the cholesterol-lowering effect for oat products containing at least 0.75 grams of oat β-glucan per serving. However, when dietary fibre is added to breakfast cereals, the sensory properties often deteriorate. Added fibre may change the product's mouthfeel to be too mealy and the appearance may become dusty, grey and less attractive. However, the main disadvantage of adding dietary fibre to breakfast cereals is that it increases the product's absorption of liquid. Also breakfast cereals containing no or only a small amount of dietary fibre absorb liquid very easily and loose its crispiness when liquid, such as milk, is poured on the cereals before eating. These unwanted properties need to be minimised or eliminated.

### Summary of the Invention

The present invention decreases soaking of breakfast cereals by adding plant sterol esters to the product. It is believed that the plant sterol esters are capable of coating the ingredients otherwise easily soaking when liquid is added to the product before eating and thereby the crispiness and mouthfeel of the product is retained. In particular, the breakfast cereals according to the invention are characterised by what is stated in the characterising part of claim 1. The method of decreasing soaking of the breakfast cereals according to the invention is characterised by what is stated in the characterising part of claim 11.

### Definitions

As used here, the term "soaking" relates to less pleasant textural characteristics, organoleptic properties, mouthfeel, crispiness, appearance and taste after liquid has been added to the breakfast cereals.

The term "liquid" comprises all moisturising components such as e.g. milk, water, juice, yoghurt or kefir.

The term "breakfast cereals" comprises breakfast cereals and between meals products that usually are eaten with some liquid, such as mueslies and crunchies. These breakfast cereals include puffed, flaked, malted, baked, extruded, shredded and/or granulated cereals, and cereals or grains that have been cooked or otherwise heat-treated. The term breakfast cereals comprises also any mixture of above-mentioned cereals. The breakfast cereals may also contain other ingredients such as oil, sugar, dried fruits, nuts, chocolate, flavouring agents, vitamines, minerals and other healthy components, and they may be coated e.g. using oil and sugar and/or toasted. Soy and other legumes may also be added to the breakfast cereals. The cereals or grains for the purposes of the present invention include e.g. wheat, oat, rye, barley, rice, corn, triticale, buckwheat, millet, sorghum or mixtures of any of these.

As used here, the term "plant sterol" include both sterols and saturated sterols, i.e. stanols.

In this specification the sterols include 4-desmethyl sterols, 4-monomethyl sterols and 4,4-dimethyl sterols (triterpene alcohols) and the stanols include 4-desmethyl stanols, 4-monomethyl stanols and 4,4-dimethyl stanols. Typical 4-desmethyl sterols are sitosterol, campesterol, stigmasterol, brassicasterol, 22-dehydrobrassicasterol and A5-avenasterol. Typical 4,4-dimethyl sterols are cycloartenol, 24-methylenecycloartenol and cyclobranol. Typical stanols are sitostanol, campestanol and their 24-epimers, cycloartanol and saturated forms obtained by saturation of e.g. triterpene alcohols (cycloartenol, 24-methylenecycloartenol and cyclobranol). The term "plant sterol" includes all possible natural blends or any mixtures of named sterols and/or stanols as well as any individual sterol or stanol.

In this invention the plant sterols are esterified with an organic acid and they are here called "plant sterol esters" or "esterified plant sterols". Examples of suitable organic acids are fatty acids (2-24 carbon atoms, saturated, monounsaturated or polyunsaturated, including also special fatty acids, such as conjugated fatty acids, e.g. CLA, and EPA and DHA), hydroxybenzoic acids, hydroxycinnamic acids (ferrulic and coumaric acids), di- and tricarboxylic acids and hydroxy acids, and any mixture of said acids. Preferably vegetable oils are used as a source of the fatty acids.

As used here the term "sugar" refers to any sweetener that has an effect on product structure including sugars and sugar alcohols and any source of them. Most preferably the sugar is sucrose based sugars such as white sugar crystals, brown sugar, sugar syrup, malt syrup, maple syrup, honey, molasses or a source of these. The term sugar refers also to the constituents of sucrose i.e. glucose and/or fructose. However, the term sugar does not include sugars from dried fruits and/or berries in the product.

By "dietary fibres" is here meant both insoluble (polysaccharides such as cellulose and hemicellulose) and soluble dietary fibres (e.g. fibre enriched material (such as enriched flour) or fibre concentrates). The dietary fibres include fibres of cereal origin, such as wheat, oats, rye, barley, rice, corn, buckwheat, triticale, millet or sorghum, or they can be fibres from any other vegetable material, such as soy, potato, sugar beet, beans, peas, carrots, or of other plant origin, such as guar gum, pectin, psyllium, resistant starch, inulin, arabinoxylans or oligofructans, or of microbial origin.

### Detailed Description of the Invention

The various features and benefits of the present invention will be described in greater detail in the following description and in the examples. All percentages referred to in this specification are given as weight-%.

It has now surprisingly been noticed that adding esterified plant sterols decreases soaking of breakfast cereals when liquid is added. Decreasing soaking is essential to pleasant crispiness and/or appearance. Especially if there is a high content of dietary fibre in the product the decreased soaking was profound. The soaking was decreased as compared to a control product that contained the same amount of triglyceride fat. The addition of plant sterol esters retains or even improves the fatty acid composition of the new product. This means that the amount of saturated fat does not necessarily increase due to added ingredients. The product is also suitable for lowering serum cholesterol levels. It was also found that addition of both sugar and plant sterol esters to the product decreased soaking even more. The results were also considerably improved when the breakfast cereals were toasted after adding plant sterol ester and sugar. In addition, the amount of absorbable fat in the final product is reduced since esterified plant sterol replaces triglyceride fat, and the sterol part of the plant sterol fatty acid ester is virtually unabsorbable.

The primary object of the present invention is thus breakfast cereals with decreased soaking after liquid is added, wherein the breakfast cereals comprise plant sterol esters in an amount from 2.2 to 25 weight-%.

Preferably these breakfast cereals comprise from 5 to 50 weigth-% of sugar, and more preferably the breakfast cereals are toasted to improve the organoleptic properties and decrease soaking even more.

The level of plant sterol esters in the breakfast cereals is from 2.2 to 25 weight-%, preferably 2.5-15 weight- % and more preferably 2.7-10 weight-%.

Preferably the plant sterol ester is a plant sterol fatty acid ester. The fatty acid ester is technically very suitable for incorporation into breakfast cereals. Preferably the plant sterol in the plant sterol ester is a stanol because its absorption is negligible and the use of stanol is therefore safer. In addition, the physical properties of stanol are more suitable for this purpose, because the stanol is saturated. Most preferred are therefore the plant stanol fatty acid esters for use in breakfast cereals according to the invention. Therefore, from 0 to 100 weight-% of the plant sterol esters may comprise stanol fatty acid esters. Preferably at least 10 weight-%, more preferably at least 50 weight-%, even more preferably at least 70 weight-%, even more preferably at least 90 weight-% and most preferably about 100 weight-% of the plant sterol esters comprise stanol fatty acid esters. According to the invention it is also possible that from 0 to 100 weight-% of the plant sterol esters comprise sterol fatty acid esters, and preferably at most 90 weight-%, more preferably at most 50 weight-%, even more preferably at most 30 weight-%, and most preferably at most 10 weight-% of the plant sterol esters comprise sterol fatty acid esters.

In one embodiment of the invention the sugar content of the breakfast cereals is from 8 to 30 weight-%, more preferably from 10 to 20 weight-%.

The incorporation of plant sterol ester into the breakfast cereals according to the invention can be performed using any known techniques for adding triglycerides. E.g. it can be introduced into the dough when breakfast cereals are prepared, or it can be coated onto the surface of some component(s) of the cereals or to the final cereal mixture. The coating can be accomplished e.g. by spraying or mixing. If the product contains also triglycerides the plant sterol ester is preferably mixed with the fat phase before applying it to the breakfast cereals. A preferred way is to mix the fatty phase containing the plant sterol ester with a sugar and then applying the coating.

In a preferred embodiment of the invention the breakfast cereals are toasted. Toasting is performed to develop desired colour and flavour, as well as moisture content. Typically toasting is performed at about 170-330 °C. Toasting can be performed to any type of breakfast cereals according to the definition (e.g. cooked, extruded, puffed, flaked, shredded or granulated), but preferably the sugar content of the product is from 5 to 50 weight-%.

An example of a process for preparing a muesli product according to the invention comprises mixing the sugar slurry, plant sterol ester, oil, flaked oats and other dry components (e.g. dry fruits) together. After mixing the muesli is toasted and sifted so that the final product contains aggregates of sizes between 2 to 11 mm. The aggregates are crispy and fragile, but not hard. Adding plant sterol ester to the muesli product will decrease soaking when the muesli is in contact with a liquid just before eating. Increasing the plant sterol ester amount also enhances the appearance of the product. The product will look more shiny, and less grey and dusty.

When dietary fibre is added to breakfast cereals, the sensory properties often deteriorate. Added fibre may change the product's mouthfeel and appearance to become less attractive. High fibre contents very often cause organoleptic problems. In the present invention the problem has been solved by addition of plant sterol esters to high-fibre cereal products. Consequently, the present invention relates to high-fibre breakfast cereals containing from 3.5 to 60 weight-% of fibre, which cereals have improved sensory quality. These products are also healthier since they are suitable for reducing serum total and/or LDL cholesterol levels.

The amount of dietary fibres in the breakfast cereals according to the invention may vary from 0 to 60 weight-%. In high-fibre breakfast cereals the level of dietary fibres in the product is from 3.5 to 60 weight-%, preferably from 5 to 60 weight-%, and most preferably from 10 to 60 weight-%. The soaking of these high-fibre products is preferably decreased by toasting.

In another embodiment of the invention the sugar content of the breakfast cereals is from 17.5 to 50 weight-%, preferably from 18 to 50 weight-%, more preferably from 20 to 50 weight-%. These products include puffed and/or extruded cereals in an amount of at least 50 weight-%, preferably at least 70 weight-%, most preferably at least 90 weight-% calculated on their cereal portion. Extruding and puffing can be accomplished in any prior known manner. Although these products do not necessarily contain much fibre they are still very easily soaked. In these products the sugar has an important role in still decreasing soaking. The fibre content of these breakfast cereals vary from 0 to 60 weight-%, preferably from 0 to 20 weight-%, more preferably from 0 to 10 weight-% and most preferably from 0 to 3.0 weight-%. These products may also be toasted.

A preferred embodiment of the invention is breakfast cereals containing 3.5 to 60 weight-% of dietary fibre, and 2.2 to 25 weight-%, preferably from 2.5 to 15 weight-% and most preferably from 2.7 to 10 weight-% of plant sterol ester. Soaking of this product is decreased and it has a good sensory quality, low energy content, and also a significant serum cholesterol-lowering effect.

Still another object of the invention is a method for decreasing the soaking of breakfast cereals after liquid is added by using plant sterol esters in an amount of 2.2 to 25 weight-% in the preparation of the breakfast cereals. Said breakfast cereals are as defined above in connection with the description of the qualitative and quantitative compositions of the breakfast cereals of the invention.

The main advantages of the present invention are:
- Improvement in the sensory quality of breakfast cereals related to decreased soaking and improved or retained crispiness.
- Good or improved fatty acid composition when nutritional value is considered.
- Lower energy content as compared to the similar product that contains only triglyceride fat. When esterified plant sterol partly or totally replace triglyceride fat the amount of absorbable fat is reduced because the sterol part of the sterol fatty acid ester is virtually unabsorbable.
- Decreased soaking compared to high-fibre cereal products without plant sterol esters.
- Dietary fibres and plant sterol together have good serum total and/or LDL-cholesterol lowering properties.
- Enhanced serum cholesterol-lowering effect compared to high-fibre breakfast cereals not containing plant sterol esters.

### Example 1

### Soaking test

Table 1 shows the effect on the soaking properties of a breakfast cereal product when adding plant sterol esters and also when varying the sugar content. The soaking test was performed in the following way:

A sample of 15 g breakfast cereals was weighted and 150 g water was poured on the sample. After 15 seconds the slurry was poured to a metal strainer and unabsorbed water flowed away. The sample was weighted again. The obtained values for the amount of water soaked in the product are mean values of four repeated tests.

The tested product was commercial rice crispy containing no dietary fibres. The process for preparation of the sugar-fat blends comprised mixing sucrose based sugar, plant stanol fatty acid ester and rapeseed oil together. Then rice crispies were mixed together with the blends. After mixing the samples were toasted. The final samples were crispy and fragile but not hard.

**Table 1**

| **Sample** | **Plant stanol fatty acid ester %** | **Rapeseed oil %** | **Sugar %** | **Water content after soaking (g)** |
|---|---|---|---|---|
| A | 0 | 9 | 17.5 | 16.6 |
| B | 0.8 | 8.2 | 17.5 | 16.5 |
| C | 2.2 | 6.8 | 17.5 | 14.7 |
| D | 6.7 | 2.3 | 17.5 | 14.7 |
| E | 6.7 | 2.3 | 5 | 17.4 |
| F | 6.7 | 2.3 | 25 | 12.8 |
| G | 0 | 0 | 0 | 23.2 |

These results show that replacing an increasing amount of triglyceride fat of the product with plant stanol fatty acid ester decreased the soaking of the product. Significant results were achieved when the product contained at least 2.2 weight-% of plant stanol fatty acid ester. It was also shown that increasing the amount of sugar in the product decreased the soaking remarkably. The best results were achieved when the product contained 2.2 weight-% or more stanol fatty acid ester and 5 weight-% or more sugar.

### Example 2

### High-fibre oat muesli containing stanol esters

### Ingredients:

| | |
|---|---|
| Oat flakes | 21 % |
| Oat bran concentrate | 40 % |
| Stanol fatty acid ester | 3 % |
| Sugar | 10 % |
| Rice crispy | 5 % |
| Rapeseed oil | 7 % |
| Syrup | 7.5 % |
| Salt | 0.5 % |
| Dried fruits | 6 % |

The muesli was prepared by mixing sugar, syrup, plant stanol ester and oil together. Flaked oats and other dry components (e.g. dry fruits) were blended. Finally all the ingredients were mixed together. After mixing the muesli was toasted and sifted so that the final product contained aggregates of sizes between 2 to 11 mm. The aggregates were crispy and fragile, but not hard.

### Example 3

### Granulated muesli containing sterol ester

| | |
|---|---|
| Oat flakes | 26 % |
| Wheat flakes | 25 % |
| Wheat bran | 8 % |
| Rice crispy | 10 % |
| Sugar | 10 % |
| Syrup | 7.5 % |
| Sterol fatty acid ester | 6.7% |
| Sunflower oil | 6.3 % |
| Salt | 0.5 % |

The muesli was prepared by mixing sugar, syrup, plant sterol ester and oil together. All other components were mixed. Finally the mixtures were blended. Thereafter the muesli was toasted and sifted so that the final product contained aggregates of sizes between 2 to 11 mm. The aggregates were crispy and fragile, but not hard.

### Example 4

### Coated corn flakes containing stanol ester

| | |
|---|---|
| Corn flakes (commercial) | 70 % |
| Sugar | 13 % |
| Syrup | 7 % |
| Rapeseed oil | 5 % |
| Stanol fatty acid ester | 5 % |

The product was prepared by mixing sugar, syrup and plant stanol ester together. Finally corn flakes were mixed together with the blend. After mixing the product was toasted. The final product was crispy and fragile but not hard.

### Example 5

### Oat crunchie

| | |
|---|---|
| Oat flour | 79.5 % |
| Sugar | 12 % |
| Rapeseed oil | 3 % |
| Stanol fatty acid ester | 3 % |
| Baking powder | 2.5 % |

All dry ingredients were mixed and a warmed blend of oil and stanol ester was sprayed on the mix. Some water was added and the dough was mixed carefully. The oat dough was cooked, extruded and toasted.

### Example 6

### Whole-grain oat cereal containing stanol ester

| | |
|---|---|
| Whole oat flour | 32 % |
| Brown sugar | 13 % |
| Soybean oil | 10 % |
| Wheat bran | 7 % |
| Oat bran | 7 % |
| Sugar | 6 % |
| Soy flour | 6 % |
| Stanol fatty acid ester | 4.5 % |
| Modified wheat starch | 4 % |
| Corn syrup | 3 % |
| Coconut | 3 % |
| Spices and aromas | 2 % |
| Baking soda | 2 % |
| Salt | 0.5 % |

All dry ingredients were mixed and a warmed mixture of oil and stanol ester was poured on the dry mix. Some water was added and the dough was mixed. The dough was then cooked and extruded.

### Example 7

### Whole wheat breakfast cereals

| | |
|---|---|
| Whole wheat flour | 70.7 % |
| Malt extract | 20 % |
| Sugar | 5.0 % |
| Stanol fatty acid ester | 3.5 % |
| Salt | 0.8 % |
| Vitamines | |

All dry ingredients were mixed and warmed stanol ester was added on the mix. Some water was added and the dough was mixed and extruded.

## Claims

1. Breakfast cereals with decreased soaking after liquid is added, **characterised in that** the cereals comprise from 2.2 to 25 weight-% plant sterol esters.

2. Breakfast cereals according to claim 1, wherein the cereals comprise from 5 to 50 weight-% sugar.

3. Breakfast cereals according to claim 1 or 2, wherein the cereals are toasted.

4. Breakfast cereals according to any one of claims 1 to 3, wherein the cereals comprise from 2.5 to 15 weight-%, preferably from 2.7 to 10 weight-% plant sterol esters.

5. Breakfast cereals according to any one of claims 1 to 4, wherein the cereals comprise from 8 to 30 weight-%, preferably from 10 to 20 weight-% sugar.

6. Breakfast cereals according to any one of claims 1 to 5, wherein the plant sterol esters comprise from 0 to 100 weight-%, preferably at least 10 weight-%, more preferably at least 50 weight-%, even more preferably at least 70 weight-% and most preferably at least 90 weight-% stanol fatty acid esters.

7. Breakfast cereals according to any one of claims 1 to 6, wherein the plant sterol esters comprise from 0 to 100 weight-%, preferably at most 90 weight-%, more preferably at most 50 weight-%, even more preferably at most 30 weight-% and most preferably at most 10 weight-% sterol fatty acid esters.

8. Breakfast cereals according to any one of claims 1 to 7, wherein the cereals comprise from 3.5 to 60 weight-%, preferably from 5 to 60 weight-% and most preferably from 10 to 60 weight-% dietary fibre.

9. Breakfast cereals according to any one of claims 1 to 8, wherein the cereals comprise from 17.5 to 50 weight-%, preferably from 18 to 50 weight-%, more preferably from 20 to 50 weight-% sugar.

10. Breakfast cereals according to claim 9, wherein the cereal portion comprises at least 50 weight-%, preferably at least 70 weight-%, most preferably at least 90 weight-% of puffed and/or extruded cereals.

11. A method for decreasing soaking of breakfast cereals after liquid is added **characterised in that** from 2.2 to 25 weight-% plant sterol esters is added to the breakfast cereals.

## Patentansprüche

1. Frühstückszerealien mit verringertem Durchweichen nach der Zugabe einer Flüssigkeit, **dadurch gekennzeichnet, daß** die Zerealien 2,2 bis 25 Gew.-% pflanzliche Sterolester umfassen.

2. Frühstückszerealien nach Anspruch 1, wobei die Zerealien 5 bis 50 Gew.-% Zucker umfassen.

3. Frühstückszerealien nach Anspruch 1 oder 2, wobei die Zerealien geröstet sind.

4. Frühstückszerealien nach einem der Ansprüche 1 bis 3, wobei die Zerealien 2,5 bis 15 Gew.-%, vorzugsweise 2,7 bis 10 Gew.-% pflanzliche Sterolester umfassen.

5. Frühstückszerealien nach einem der Ansprüche 1 bis 4, wobei die Zerealien 8 bis 30 Gew.-%, vorzugsweise 10 bis 20 Gew.-% Zucker umfassen.

6. Frühstückszerealien nach einem der Ansprüche 1 bis 5, wobei die pflanzlichen Sterolester 0 bis 100 Gew.-%, vorzugsweise mindestens 10 Gew.-%, stärker bevorzugt mindestens 50 Gew.-%, noch stärker bevorzugt mindestens 70 Gew.-% und besonders bevorzugt mindestens 90 Gew.-% Stanolfettsäureester umfassen.

7. Frühstückszerealien nach einem der Ansprüche 1 bis 6, wobei die pflanzlichen Sterolester 0 bis 100 Gew.-%, vorzugsweise höchstens 90 Gew.-%, stärker bevorzugt höchstens 50 Gew.-%, noch stärker bevorzugt höchstens 30 Gew.-% und besonders bevorzugt höchstens 10 Gew.-% Sterolfettsäureester umfassen.

8. Frühstückszerealien nach einem der Ansprüche 1 bis 7, wobei die Zerealien 3,5 bis 60 Gew.-%, vorzugsweise 5 bis 60 Gew.-% und besonders bevorzugt 10 bis 60 Gew.-% diätetische Fasern umfassen.

9. Frühstückszerealien nach einem der Ansprüche 1 bis 8, wobei die Zerealien 17,5 bis 50 Gew.-%, vorzugsweise 18 bis 50 Gew.-%, stärker bevorzugt 20 bis 50 Gew.-% Zucker umfassen.

10. Frühstückszerealien nach Anspruch 9, wobei der Zerealienanteil mindestens 50 Gew.-%, vorzugsweise mindestens 70 Gew.-%, besonders bevorzugt mindestens 90 Gew.-% gepuffte und/oder extrudierte Zerealien umfaßt.

11. Verfahren zum Verringern des Durchweichens von Frühstückszerealien nach der Zugabe einer Flüssigkeit, **dadurch gekennzeichnet, daß** den Frühstückszerealien 2,5 bis 25 Gew.-% pflanzliche Sterolester zugesetzt werden.

## Revendications

1. Céréales pour petit déjeuner à trempage réduit après l'ajout de liquide, **caractérisées en ce que** les céréales comprennent de 2,2 à 25 % en poids d'esters de stérols végétaux.

2. Céréales pour petit déjeuner selon la revendication 1, dans lesquelles les céréales comprennent de 5 à 50 % en poids de sucre.

3. Céréales pour petit déjeuner selon la revendication 1 ou 2, dans lesquelles les céréales sont grillées.

4. Céréales pour petit déjeuner selon l'une quelconque des revendications 1 à 3, dans lesquelles les céréales comprennent de 2,5 à 15 % en poids, de préférence de 2,7 à 10 % en poids d'esters de stérols végétaux.

5. Céréales pour petit déjeuner selon l'une quelconque des revendications 1 à 4, dans lesquelles les céréales comprennent de 8 à 30 % en poids, de préférence de 10 à 20 % en poids de sucre.

6. Céréales pour petit déjeuner selon l'une quelconque des revendications 1 à 5, dans lesquelles les esters de stérols végétaux comprennent de 0 à 100 % en poids, de préférence au moins 10 % en poids, plus préférablement au moins 50 % en poids, encore plus préférablement au moins 70 % en poids et de manière préférée entre toutes au moins 90 % en poids d'esters d'acide gras de stanol.

7. Céréales pour petit déjeuner selon l'une quelconque des revendications 1 à 6, dans lesquelles les esters de stérols végétaux comprennent de 0 à 100 % en poids, de préférence au plus 90 % en poids, plus préférablement au plus 50 % en poids, encore plus préférablement au plus 30 % en poids et de manière préférée entre toutes au plus 10 % en poids d'esters d'acide gras de stérol.

8. Céréales pour petit déjeuner selon l'une quelconque des revendications 1 à 7, dans lesquelles les céréales comprennent de 3,5 à 60 % en poids, de préférence de 5 à 60 % en poids, et de manière préférée entre toutes de 10 à 60 % en poids de fibres alimentaires.

9. Céréales pour petit déjeuner selon l'une quelconque des revendications 1 à 8, dans lesquelles les céréales comprennent de 17,5 à 50 % en poids, de préférence de 18 à 50 % en poids, et de manière préférée entre toutes de 20 à 50 % en poids de sucre.

10. Céréales pour petit déjeuner selon la revendication 9, dans lesquelles la portion de céréales comprend au moins 50 % en poids, de préférence au moins 70 % en poids, de manière préférée au moins 90 % en poids de céréales soufflées et/ou extrudées.

11. Procédé de trempage réduit de céréales pour petit déjeuner après l'ajout de liquide, **caractérisé en ce que** de 2,2 à 25 % en poids d'esters de stérols végétaux sont ajoutés aux céréales pour petit déjeuner.
